# EUROPÄISCHE PATENTSCHRIFT

(11) **EP 3 282 331 B1**
(45) Veröffentlichungstag und Bekanntmachung des Hinweises auf die Patenterteilung: **03.08.2022**
(21) Anmeldenummer: 17185860.8
(22) Anmeldetag: 11.08.2017
(51) Int. Cl.: G05B 19/042, G06F 13/10, G06F 13/364, G06F 13/40, G06F 13/42

(54) **FUNKTIONSANSCHLUSSEINHEIT**
FUNCTIONAL CONNECTION UNIT
UNITÉ D'ENTRÉE/SORTIE POUR LA CONNECTION DE DISPOSITIFS DE TERRAIN

(30) Priorität: 12.08.2016 DE 102016115009
(43) Veröffentlichungstag der Anmeldung: 14.02.2018
(60) Teilanmeldung: 22180690.4
(73) Patentinhaber: Phoenix Contact GmbH & Co. KG, 32825 Blomberg (DE)
(72) Erfinder: ÖZTÜRK, Özkan, 31812 Bad Pyrmont (DE)
(74) Vertreter: Patentship Patentanwaltsgesellschaft mbH

(56) Entgegenhaltungen:
- WO-A1-2015/075615
- DE-A1-102007 054 417
- DE-A1-102011 107 321
- DE-A1-102014 119 101

## Beschreibung

Die vorliegende Erfindung betrifft eine Funktionsanschlusseinheit, insbesondere einen I/O-Master.

Zum Anschluss und zur Konfiguration von Funktionsmodulen der Automatisierungstechnik wie Aktoren oder Sensoren werden üblicherweise Funktionsanschlusseinheiten, auch I/O-Master genannt, eingesetzt, welche beispielsweise gemäß dem Single-Drop Digital Communication Interface for Small Sensors and Actuators (SDCI)-Protokoll arbeiten. Ein Beispiel einer SDCI-Funktionsanschlusseinheit ist der I/O-Link-Master, welcher beispielsweise in der DE 10 2011 006590 A1 beschrieben ist.

Die an eine Funktionsanschlusseinheit angeschlossenen Funktionsmodule müssen für die gewünschte Betriebsweise jedoch parametrisiert, also gerätespezifisch konfiguriert werden. Dies erfolgt üblicherweise durch eine Parametrisierung der Funktionsmodule, wobei beispielsweise Sensorempfindlichkeiten eingestellt werden können. Die Parametrierung der Funktionsmodule wird üblicherweise mittels einer speziellen Serviceschnittstelle modulspezifisch vorab durch einen Servicetechniker durchgeführt, was jedoch mit hohem Aufwand verbunden ist.

Die Druckschrift DE 10 2007 054 417 A1 offenbart in Figur 5 ein Feldgerät 36, das als modular aufgebauter Sensor ausgebildet ist. Der Sensor umfasst ein Mainboard M1 und eine Netzteilplatine M2, die über eine serielle ISS-Schnittstelle 20 miteinander verbunden sind.

Die Druckschrift DE 2014 / 119 101 A1 offenbart eine Funktionsanschlusseinheit mit einem Parameterspeicher. Die Funktionsanschlusseinheit ist ausgebildet, die Parameterdaten aus dem Parameterspeicher auszulesen und zumindest ein Funktionsmodul auf Basis der ausgelesenen Parameterdaten gerätespezifisch zu parametrisieren.

Es ist daher die Aufgabe der vorliegenden Erfindung, ein effizienteres Konzept für den Anschluss von Funktionsmodulen in der Automatisierungstechnik zu schaffen.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die vorliegende Erfindung basiert auf der Erkenntnis, dass die Funktionsmodule mittels einer Funktionsanschlusseinheit parametriert werden können, wenn die Funktionsanschlusseinheit die durch einen Benutzer eingegebenen Parameterdatensätze, die nicht modulspezifisch sind, automatisch in modulspezifische Parameterdatensätze umwandelt und diese an das jeweilige Funktionsmodul überträgt. Die Umwandlung betrifft beispielsweise die Änderung der in den Parameterdatensätzen angegebenen und im Allgemeinen unspezifischen Speicherbereiche zur Speicherung der Parameterdaten in spezifische Speicherbereiche des Funktionsmoduls, in welchen die Parameterdaten gespeichert werden sollen.

Auf diese Weise entfällt die Notwendigkeit einer speziellen Serviceschnittstelle zur Parametrierung der Funktionsmodule. Außerdem kann die Funktionsanschlusseinheit automatisch auf der Basis der durch den Parameterspeicher bereitgestellten Parameterdatensätze die Funktionsmodule parametrisieren.

Die Parameterdatensätze können anhand einer allgemeinen Parameterbeschreibung, welche parametrisierbare Parameter auflistet und beispielsweise in der Gestalt einer XML-Datei vorliegt, beispielsweise durch einen Benutzer mittels eines Computers und ggf. einer Inbetriebnahmesoftware erstellt werden.

Gemäß einem ersten Aspekt betrifft die Erfindung eine Funktionsanschlusseinheit für den Anschluss zumindest eines parametrierbaren Funktionsmoduls gemäß Anspruch 1.

Die Parameterdatensätze bzw. die Parameterindizes können während der Inbetriebnahme, sozusagen beim "Hochfahren", der Funktionsanschlusseinheit abgerufen werden, beispielsweise von einem Steuercomputer. Auf diese Weise wird die Funktionsanschlusseinheit in den Zustand überführt, die korrekten zweiten Parameterindizes für das Funktionsmodul zu verwenden. Hierbei kann die Funktionsanschlusseinheit das Vorhandensein der Parameterdaten erkennen, um die Parameterdatensätze zu manipulieren und um die Parameterindizes an beispielsweise die Speicherzuordnung zu den Parameterdaten, in welchen diese gespeichert werden sollen, in dem Funktionsmodul anzupassen.

Der Speicherbereich der ersten Parameterdatensätze kann unspezifisch sein und beispielsweise andere Funktionsmodule betreffen. Durch die Umwandlung der Parameterindizes werden den Parameterdaten spezifische Speicherbereiche des Funktionsmoduls zugewiesen, in welchen die Parameterdaten gespeichert werden sollen. Auf diese Weise wird sichergestellt, dass die Parameterdaten in dem Funktionsmodul an den jeweils hierfür vorgesehenen Speicheradressen gespeichert werden.

Die Parameterdatensätze können in einem Datenformat vorliegen, welches durch eine Parameterlänge und/oder durch eine Anzahl von Parameterdaten bestimmt ist.

Die Funktionsanschlusseinheit kann ausgebildet sein, die Parameterdatensätze bzw. die Parameterindizes in den Parameterdatensätzen zu detektieren, und die ersten Parameterindizes durch die zweiten Parameterindizes auszutauschen.

Die jeweiligen Parameterdatensätze ermöglichen eine gerätespezifische Parametrisierung bzw. Konfiguration der Funktionsmodule. Die Parameterdatensätze bzw. deren Parameterdaten können beispielsweise technische Empfindlichkeiten, Schaltverzögerungen, Kennlinien oder Wertebereiche der Funktionsmodule angeben. Außerdem können die Parameterdatensätze Informationen zur Identifikation der Funktionsmodule, Prozess- und Diagnosedaten, Kommunikationseigenschaften und den Aufbau des Anwender-Interfaces in Engineering Tools angeben. Die Parameterdatensätze können in der Gestalt einer oder mehrerer Dateien vorliegen, z.B. einer Hauptdatei und einer optionalen externen Sprachdatei, beispielsweise in XML-Format. Die Parameterdatensätze können ferner Bilddateien im PNG-Format umfassen. Im Kontext der I/O-Link-Technologie können die Parameterdatensätze in einer I/ODD-Datei (I/O Device Description) vorliegen.

Die Funktionsmodule sind beispielsweise Sensoren oder Aktoren gemäß der Norm IEC 61131-9.

Dadurch wird der technische Vorteil erreicht, dass zur Parametrierung der Funktionsmodule, beispielsweise Sensoren oder Aktoren, keine spezielle Serviceschnittstelle mehr vorgesehen sein muss. Außerdem ist zur Parametrierung der Funktionsmodule keine externe Kommunikationsverbindung, wie etwa ein Feldbus, notwendig.

Bei dem verwendeten Kommunikationsprotokoll zur Kommunikation mit den Funktionsmodulen kann es sich um ein Kommunikationsprotokoll gemäß I/O-Link oder "Single-Drop Digital Communication Interface for Small Sensors and Actuators (SDCI)" handeln. Der I/O-Link ist eine Punkt-zu-Punkt-Schnittstelle für den Funktionsmodulanschluss beliebiger Sensorik und Aktuatorik beispielsweise an ein Steuerungssystem. Gemäß SDCI wird eine Anbindung von Funktionsmodulen, wie z.B. Sensoren und/oder Aktoren in Übereinstimmung mit der Norm IEC 61131-9 durchgeführt.

In einer vorteilhaften Ausführungsform ist die Funktionsanschlusseinheit ein Master gemäß dem SDCI-Protokoll, insbesondere ein I/O-Linkmaster. Somit ist eine Anbindung von intelligenten Funktionsmodulen, wie z.B. Sensoren und/oder Aktoren gemäß der Norm IEC 61131-9 möglich.

Erfindungsgemäß weist die Funktionsanschlusseinheit ferner einen Parameterdatenspeicher auf, wobei in dem Parameterdatenpeicher eine Überführungsvorschrift gespeichert ist, welche die Überführung der ersten Parameterindizes in die zweiten Parameterindizes angibt, und wobei der Prozessor ausgebildet ist, die Überführungsvorschrift aus dem Speicher auszulesen und die ersten Parameterindizes in die zweiten Parameterindizes gemäß der Überführungsvorschrift zu überführen.

Die Überführungsvorschrift kann beispielsweise angeben, in welchen Speicherbereichen des Funktionsmoduls die Parameterdaten gespeichert werden sollen.

Erfindungsgemäß indizieren oder formen die zweiten Parameterindizes zumindest eine Speicheradresse des parametrierbaren Funktionsmoduls. Auf diese Weise wird den Parameterdaten die für die Parameterdaten vorgesehene Speicheradresse angegeben.

Erfindungsgemäß weisen die ersten Parameterdatensätze ein Aktivierungsfeld auf, dass eine Aktivierung oder eine Deaktivierung der Parameterdaten anzeigt. Auf diese Weise kann vorteilhaft bestimmt werden, welche Parameterdaten beispielsweise übernommen werden sollen.

In einer vorteilhaften Ausführungsform ist der Prozessor ausgebildet, die Anordnung der Parameterdaten durch eine Änderung einer Reihenfolge der ersten Parameterindizes zu ändern, um die zweiten Parameterdatensätze zu erhalten. Auf diese Weise wird die Reihenfolge der Parameterdaten oder der Speicheradressen der für die Parameterdaten vorgesehenen Speicherbereiche geändert.

In einer vorteilhaften Ausführungsform weisen die ersten Parameterdatensätze eine erste Parameterdarstellung auf, wobei der Prozessor ausgebildet ist, die erste Parameterdarstellung in eine zweite Parameterdarstellung zu überführen, um die zweiten Parameterdatensätze in dem zweiten Datenformat zu erhalten.

Erfindungsgemäß umfassen die ersten Parameterdatensätze einen ersten Zahlenwert, wobei der Prozessor ausgebildet ist, den ersten Zahlenwert in einen zweiten Zahlenwert zu überführen, welcher in einem Zahlenbereich des parametrierbare Funktionsmoduls liegt, um die zweiten Parameterdatensätze zu erhalten.

In einer vorteilhaften Ausführungsform umfassen die ersten Parameterdatensätze eine erste Zahlendarstellung, insbesondere eine duale, dezimale oder hexadezimale Zahlendarstellung, wobei der Prozessor ausgebildet ist, die erste Zahlendarstellung in eine zweite Zahlendarstellung, insbesondere eine duale, dezimale oder hexadezimale Zahlendarstellung, zu überführen, um die zweiten Parameterdatensätze zu erhalten.

In einer vorteilhaften Ausführungsform umfassen die ersten Parameterdatensätze und/oder die zweiten Parameterdatensätze eine Parameterlänge und/oder einen Parameterwert.

In einer vorteilhaften Ausführungsform umfasst die Kommunikationsschnittstelle eine Eingabeschnittstelle, insbesondere eine graphische Benutzerschnittstelle oder eine Tastatur, zur manuellen Eingabe der ersten Parameterdatensätze.

In einer vorteilhaften Ausführungsform ist die Kommunikationsschnittstelle zur Datenübertragung gemäß einem Kommunikationsprotokoll, insbesondere gemäß dem USB-Protokoll, ausgebildet.

In einer vorteilhaften Ausführungsform sind an die Funktionsanschlusseinheit Sensoren und/oder Aktoren als parametrierbare Funktionsmodule anschließbar.

Gemäß einem zweiten Aspekt betrifft die Erfindung ein Verfahren gemäß Anspruch 8 zur Parametrierung eines parametrierbaren Funktionsmoduls mittels einer Funktionsanschlusseinheit, an welche das parametrierbare Funktionsmodul über einen Funktionsmodulanschluss angeschlossen ist.

Das Verfahren kann mittels der Funktionsanschlusseinheit nach dem ersten Aspekt durchgeführt werden.

In einer vorteilhaften Ausführungsform wird das Verfahren während einer Inbetriebnahme der Funktionsanschlusseinheit durchgeführt.

Erfindungsgemäß werden in dem Schritt des Empfangens die ersten Parameterdatensätze von einem Steuerserver über ein Kommunikationsnetzwerk empfangen.

Weitere Merkmale des Verfahrens ergeben sich unmittelbar aus den Funktionsmerkmalen der Funktionsanschlusseinheit gemäß dem ersten Aspekt.

Weitere Ausführungsbeispiele werden Bezug nehmend auf die beiliegenden Zeichnungen erläutert. Es zeigen:
- Fig. 1: eine schematische Darstellung einer Funktionsanschlusseinheit;
- Fig. 2: ein Kommunikationssystem; und
- Fig. 3: ein Kommunikationssystem.

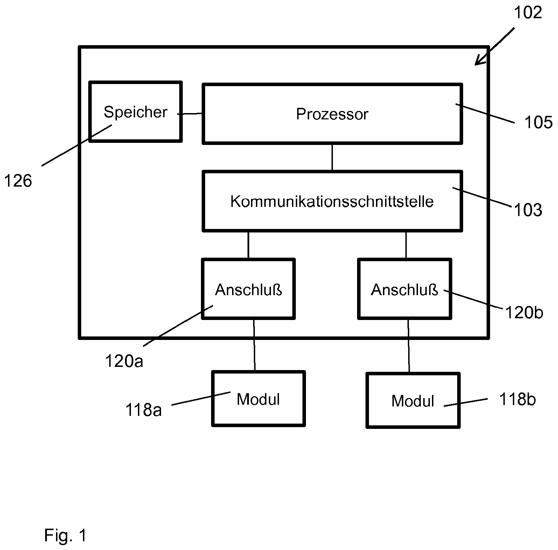

Fig. 1 zeigt Funktionsanschlusseinheit 102 für den Anschluss zumindest eines parametrierbaren Funktionsmoduls 118a, 118b, mit zumindest einem Funktionsmodulanschluss 120a, 120b, an welchen das parametrierbare Funktionsmodul 118a, 118b anschließbar ist, einer Kommunikationsschnittstelle 103, welche ausgebildet ist, erste Parameterdatensätze zur Parametrisierung des parametrierbaren Funktionsmoduls 118a, 118b zu empfangen, und einem Prozessor 105, welcher ausgebildet ist, die ersten Parameterdatensätze in zweite Parameterdatensätze zu überführen.. Der Prozessor 105 ist ferner ausgebildet, die zweiten Parameterdatensätze an dem Funktionsmodulanschluss zur Parametrierung des Funktionsmoduls bereitzustellen.

Zur Überführung der ersten Parameterdatensätze in die zweiten Parameterdatensätze ist der Prozessor 105 ausgebildet, erste Parameterindizes in zweite Parameterindizes zu überführen. Auf diese Weise wird erreicht, dass den Parameterdaten diejenigen Speicherbereiche des Funktionsmoduls automatisch zugeordnet werden, welche für die jeweiligen Parameterdaten vorgesehen sind.

Gemäß einer Ausführungsform kommuniziert die Funktionsanschlusseinheit 102 mit dem parametrierbaren Funktionsmodul 118a, 118b über ein Protokoll gemäß I/O-Link bzw. SDCI. Die I/O-Link-Technologie stellt eine Punkt-zu-Punkt-Schnittstelle für den Funktionsmodulanschluss beliebiger Sensorik und Aktuatorik an ein Steuerungssystem zur Verfügung. Die Funktionsanschlusseinheit 102 kann daher beispielsweise ein SDCI-Link-Master bzw. ein I/O-Link-Master sein.

Die Funktionsmodule 118a, 118b sind beispielsweise Aktoren oder Sensoren gemäß der Norm IEC 61131-9.

Die Funktionsanschlusseinheit 102 ist gemäß einer Ausführungsform an einen Feldbus anschließbar. Bei dem Feldbus kann es sich z.B. um PROFIBUS, PROFINET, Interbus, AS-i, EVA-CAT oder Powerlink handeln.

Die Funktionsanschlusseinheit 102 weist gemäß einer Ausführungsform Funktionsmodulanschlüsse 120a, 120b auf, die im vorliegenden Beispiel als I/O-Ports ausgebildet sein können. Gemäß einer Ausführungsform sind die Funktionsmodulanschlüsse 120a, 120b als I/O-Link oder SDCI kompatible Schnittstellen gemäß einem Kommunikationsprotokoll, beispielsweise I/O-Link bzw. SDCI ausgebildet.

Gemäß einer Ausführungsform umfasst die Funktionsanschlusseinheit 102 einen Parameterdatenspeicher 126, wobei in dem Parameterdatenspeicher 126 eine Überführungsvorschrift gespeichert ist, welche die Überführung der ersten Parameterdatensätze in dem ersten Datenformat in zweite Parameterdatensätze gemäß dem zweiten Datenformat angibt, und wobei der Prozessor 105 ausgebildet ist, die Überführungsvorschrift aus dem Speicher auszulesen und die ersten Parameterdatensätze in die zweiten Parameterdatensätze gemäß der Überführungsvorschrift zu überführen.

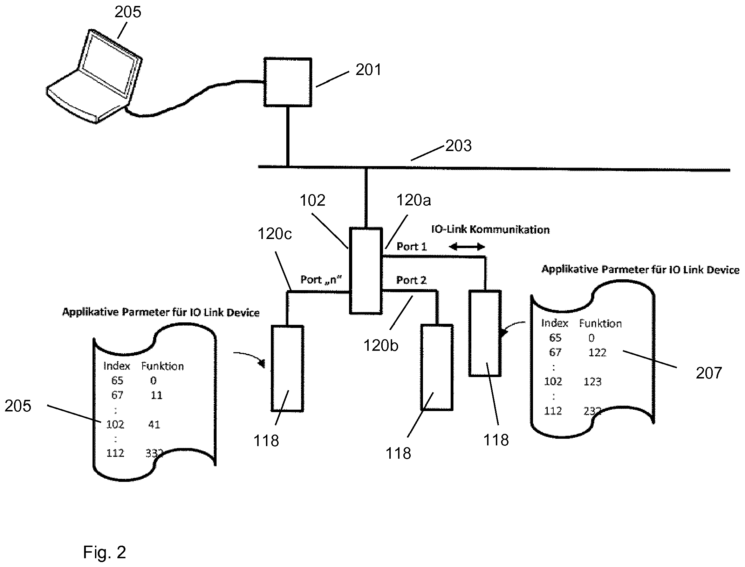

Fig. 2 zeigt ein Kommunikationssystem mit der Funktionsanschlusseinheit 102, beispielsweise IO Link Master, welche über ein Netzwerk/Bussystem 203 an eine überlagerte Steuereinheit 201 oder SPS 201 angebunden ist. An die Anschlüsse 120a-120c der der Funktionsanschlusseinheit 102 können eine oder mehrere verschiedene Funktionsmodule 118, beispielsweise IO-Link Devices angeschlossen werden. Die Funktionsmodule 118 können Sensoren, Aktoren oder IO-Stationen sein. Die Funktionsmodule 118 sind mit Parametern, die beispielswiese auf Werkseinstellungen stehen, verfügbar. Ferner ist eine optionale Geräteinstanz, beispielsweise ein Computer, mit der Steuereinheit 201 verbunden.

In Fig. 2 sind ferner beispielhafte erste Parameterdatensätze 205 für die Funktionsanschlusseinheit 102 und zweite Parameterdatensätze 207 für das Funktionsmodul 118 dargestellt.

Für den jeweiligen Anwendungsfall/Applikation können diese Parameter auf dem jeweiligen Funktionsmodul 118 verändert und/oder angepasst werden, damit können Funktionen auf dem jeweiligen Funktionsmodul 118 aktiviert/deaktiviert oder Eigenschaften des jeweiligen Funktionsmoduls 118 verändert werden. Die Parameter liegen im Falle von IO-Link- Funktionsmodulen 118 auf IO-Link Indexen des jeweiligen Funktionsmoduls 118 und werden von der Funktionsanschlusseinheit 102 überlagerten Steuereinheit 201 mittels Parametersatz-Diensten zur Funktionsanschlusseinheit 102 übermittelt.

Die Funktionsanschlusseinheit 102 überführt diese Daten in ein Format, welches durch das jeweilige Funktionsmodul 118 interpretierbar ist, und sendet diese beispielswiese mittels spezifischer IO-Link Dienste an das jeweilige Funktionsmodul 118.

Die Funktionsanschlusseinheit 102 überträgt die Parameter an die das jeweilige Funktionsmodul 118.

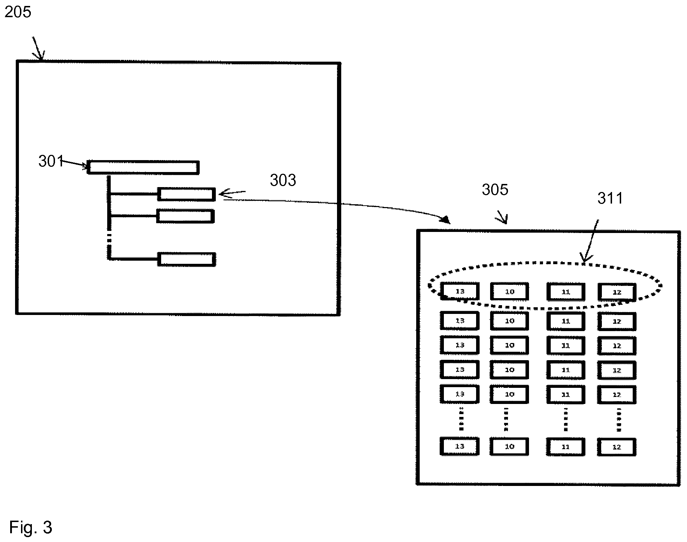

Wie es in Fig. 3 dargestellt ist, hat ein Benutzer die Möglichkeit im Engineeringsystem für die jeweilige Steuereinheit 201 in der Geräteinstanz eine Instanz 301, beispielsweise eine Softwareinstanz, der Funktionsanschlusseinheit 102 anzulegen und beispielsweise an einem Anschluss (Port) 303 der Instanz 301 der Funktionsanschlusseinheit 102 beispielsweise das IO-Link Parametriermodul 305 einzubinden. An dem Parametriermodul 305 können zyklische Prozessdaten ausgetauscht werden und es stehen dem Benutzer mehrere freie Parameterblöcke für die Parameter zur Verfügung.

Jeder der Parameterblöcke 311, in welchen Parameterdaten angeordnet sein können, umfasst beispielsweise einen Eintrag für den Index 10, die Länge 11 der Parameter, den Parameterwert 12 und/oder die Benutzung 13 dieses Parameterblocks 311.

In dem Feld Index 10 trägt der Benutzer, die beispielsweise von einem IO-Link Gerätehersteller für die bestimmte Eigenschaft oder Funktion vorgebenen Parameterindex (beispielsweise Index Adresse), ein. In dem Feld "länge der Parameter" 11 trägt der Benutzer die vom IO-Link Gerätehersteller für dieses Indexfeld vorgesehene Parameterlänge ein. In dem Feld Parameterwert 12 trägt der Benutzer einen Parameterwert ein, mit dem die Funktionen oder Eigenschaften des Funktionsmoduls verändert werden können. In dem Feld "Benutzung des Parameterblocks" 311 kann der jeweilige Parameterblock aktiviert oder deaktiviert werden. Die Funktionsanschlusseinheit 102 kann abhängig von diesem Wert, die Parameter an das Funktionsmodul, beispielsweise IO-Link Device, übertragen oder nicht übertragen.

Somit kann der Benutzer in der Geräteinstanz für die Steuereinheit 201 an der Instanz der Funktionsanschlusseinheit 102 an dem jeweiligen Port an dem das jeweilige Funktionsmodul 118, beispielswiese IO-Link Device angeschlossen, ist die für seine Applikation nötigen Parameter einstellen. Diese Parametersätze - werden in einer Ausführungsform zu Beginn des Aufbaus der Kommunikationsbeziehung zwischen der Steuereinheit 201 und der Funktionsanschlusseinheit 102 als sogenannte "Anlaufparameter" gesendet. Die Funktionsanschlusseinheit 102 interpretiert die Parameterblöcke und die jeweiligen Parameter zu den Indexen des an dem jeweiligen Port bzw. Anschluss angeschlossenen Funktionsmoduls, beispielsweise per IO-Link.

## Patentansprüche

1. Funktionsanschlusseinheit (102) für den Anschluss zumindest eines parametrierbaren Funktionsmoduls (118a, 118b), mit:
zumindest einem Funktionsmodulanschluss (120a, 120b), an welchen das parametrierbare Funktionsmodul (118a, 118b) anschließbar ist;
einer Kommunikationsschnittstelle (103), welche ausgebildet ist, erste Parameterdatensätze zu empfangen, wobei die ersten Parameterdatensätze Parameterdaten zur Parametrisierung des parametrierbaren Funktionsmoduls (118a, 118b) und erste Parameterindizes aufweisen, welche einen Speicherbereich für die Parameterdaten indizieren; und
einem Prozessor (105), welcher ausgebildet ist, die ersten Parameterindizes in zweite Parameterindizes zu überführen, um zweite Parameterdatensätze zu erhalten, wobei die zweiten Parameterindizes einen vorbestimmten Speicherbereich des parametrierbaren Funktionsmoduls (118a, 118b) für die Speicherung der Parameterdaten in dem parametrierbaren Funktionsmodul (118a, 118b) indizieren,
wobei
die Funktionsanschlusseinheit (102) einen Parameterdatenspeicher (126) aufweist, wobei in dem Parameterdatenspeicher (126) eine Überführungsvorschrift gespeichert ist, welche die Überführung der ersten Parameterindizes in die zweiten Parameterindizes angibt, und
wobei der Prozessor ausgebildet ist, die Überführungsvorschrift aus dem Parameterdatenspeicher (126) auszulesen und die ersten Parameterindizes in die zweiten Parameterindizes gemäß der Überführungsvorschrift zu überführen,
wobei die Kommunikationsschnittstelle (103) ausgebildet ist, die ersten Parameterindizes von einem Steuerserver während einer Inbetriebnahme der Funktionsanschlusseinheit (102), zu empfangen,
wobei die zweiten Parameterindizes zumindest eine Speicheradresse des parametrierbaren Funktionsmoduls (118a, 118b) sind,
**dadurch gekennzeichnet, dass**
die ersten Parameterdatensätze ein Aktivierungsfeld aufweisen, das eine Aktivierung oder eine Deaktivierung der Parameterdaten anzeigt,
und dass die ersten Parameterdaten einen ersten Zahlenwert umfassen, wobei der Prozessor (105) ausgebildet ist, den ersten Zahlenwert in einen zweiten Zahlenwert zu überführen, welcher in einem Zahlenbereich des parametrierbare Funktionsmoduls (118a, 118b) liegt, um die zweiten Parameterdatensätze zu erhalten.

2. Funktionsanschlusseinheit (102) nach Anspruch 1, wobei die Funktionsanschlusseinheit (102) ein Master gemäß dem Single-Drop Digital Communication Interface for Small Sensors and Actuators (SDCI)-Protokoll, insbesondere ein I/O-Linkmaster, ist.

3. Funktionsanschlusseinheit (102) nach einem der vorstehenden Ansprüche, wobei die ersten Parameterdaten eine erste Parameterdarstellung aufweisen, und wobei der Prozessor ausgebildet ist, die erste Parameterdarstellung in eine zweite Parameterdarstellung zu überführen, um die zweiten Parameterdatensätze zu erhalten.

4. Funktionsanschlusseinheit (102) nach einem der vorstehenden Ansprüche, wobei die ersten Parameterdatensätze und/oder die zweiten Parameterdatensätze ferner eine Parameterlänge und/oder einen Parameterwert der Parameterdaten umfassen.

5. Funktionsanschlusseinheit (102) nach einem der vorstehenden Ansprüche, wobei die Kommunikationsschnittstelle (103) eine Eingabeschnittstelle, insbesondere eine graphische Benutzerschnittstelle oder eine Tastatur, zur manuellen Eingabe der ersten Parameterdatensätze umfasst.

6. Funktionsanschlusseinheit (102) nach einem der vorhergehenden Ansprüche, wobei die Kommunikationsschnittstelle (103) zur Datenübertragung gemäß einem Kommunikationsprotokoll, insbesondere gemäß dem USB-Protokoll, ausgebildet ist.

7. Funktionsanschlusseinheit (102) nach einem der vorhergehenden Ansprüche, an welche Sensoren und/oder Aktoren als parametrierbare Funktionsmodule (118a, 118b) anschließbar sind.

8. Verfahren zur Parametrierung eines parametrierbaren Funktionsmoduls (118a, 118b) mittels einer Funktionsanschlusseinheit (102), an welche das parametrierbare Funktionsmodul (118a, 118b) über einen Funktionsmodulanschluss (120a - 120b) angeschlossen ist, mit:
Empfangen von ersten Parameterdatensätzen zur Parametrisierung des parametrierbaren Funktionsmoduls (118a, 118b), wobei die ersten Parameterdatensätze Parameterdaten zur Parametrisierung des parametrierbaren Funktionsmoduls (118a, 118b) und erste Parameterindizes aufweisen, welche einen Speicherbereich für die Parameterdaten indizieren;
Überführen der ersten Parameterindizes in zweite Parameterindizes, um zweite Parameterdatensätze zu erhalten, wobei die zweiten Parameterindizes einen vorbestimmten Speicherbereich des parametrierbaren Funktionsmoduls (118a, 118b) für die Speicherung der Parameterdaten in dem parametrierbaren Funktionsmodul (118a, 118b) indizieren;
Aussenden der zweiten Parameterdatensätze durch die Funktionsanschlusseinheit (102) an das parametrierbare Funktionsmodul (118a, 118b), um das parametrierbare Funktionsmodul (118a, 118b) zu parametrieren;
Auslesen einer Überführungsvorschrift, welche eine Überführung der ersten Parameterindizes in die zweiten Parameterindizes angibt, aus einem Parameterdatenspeicher (126), in dem die Überführungsvorschrift gespeichert ist,
wobei das Überführen der ersten Parameterindizes in die zweiten Parameterindizes gemäß der Überführungsvorschrift erfolgt,
wobei die zweiten Parameterindizes zumindest eine Speicheradresse des parametrierbaren Funktionsmoduls (118a, 118b) sind,
**dadurch gekennzeichnet, dass**
die ersten Parameterdatensätze ein Aktivierungsfeld aufweisen, das eine Aktivierung oder eine Deaktivierung der Parameterdaten anzeigt,
dass die ersten Parameterindizes von einem Steuerserver während einer Inbetriebnahme der Funktionsanschlusseinheit (102) empfangen werden,
und dass die ersten Parameterdaten einen ersten Zahlenwert umfassen, wobei der Prozessor (105) den ersten Zahlenwert in einen zweiten Zahlenwert überführt, welcher in einem Zahlenbereich des parametrierbaren Funktionsmoduls (118a, 118b) liegt, um die zweiten Parameterdatensätze zu erhalten.

9. Verfahren nach Anspruch 8, das während einer Inbetriebnahme der Funktionsanschlusseinheit (102) durchgeführt wird.

## Claims

1. A functional connection unit (102) for connecting at least one parameterizable functional module (118a, 118b), comprising:
at least one functional module connection (120a, 120b), to which the parameterizable functional module (118a, 118b) is connectable;
a communication interface (103), which is configured to receive first parameter data records, wherein the first parameter data records comprise parameter data for parameterizing the parameterizable functional module (118a, 118b) and first parameter indices, the first parameter indices indexing a memory area for the parameter data; and
a processor (105), which is configured to convert the first parameter indices into second parameter indices in order to obtain second parameter data records, the second parameter indices indexing a predetermined memory area of the parameterizable functional module (118a, 118b) for storing the parameter data in the parameterizable functional module (118a, 118b),
wherein the functional connection unit (102) further comprises a parameter data memory (126), wherein a conversion rule is stored in the parameter data memory (126), the conversion rule indicating the conversion of the first parameter indices into the second parameter indices, and wherein the processor is configured to read out the conversion rule from the parameter data memory (125) and to convert the first parameter indices into the second parameter indices according to the conversion rule,
wherein the communication interface (103) is configured to receive the first parameter indices from a control server during an activation of the functional connection unit (102),
wherein the second parameter indices are at least one memory address of the parameterizable functional module (118a, 118b),
**characterized in that** the first parameter data records comprise an activation field, which indicates an activation or a deactivation of the parameter data,
and that the first parameter data comprises a first numerical value, wherein the processor (105) is configured to convert the first numerical value into a second numerical value, which is in a number range of the parameterizable functional module (118a, 118b) in order to obtain the second parameter data records.

2. The functional connection unit (102) according to Claim 1, wherein the functional connection unit (102) is a master according to the Single-Drop Digital Communication Interface for Small Sensors and Actuators (SDCI) protocol, in particular an I/O link master.

3. The functional connection unit (102) according to one of the preceding claims, wherein the first parameter data have a first parameter representation, and wherein the processor is configured to convert the first parameter representation into a second parameter representation in order to obtain the second parameter data records.

4. The functional connection unit (102) according to one of the preceding claims, wherein the first parameter data records and/or the second parameter data records further comprise a parameter length and/or a parameter value of the parameter data.

5. The functional connection unit (102) according to one of the preceding claims, wherein the communication interface (103) comprises an input interface, in particular a graphical user interface or a keyboard, for manually inputting the first parameter data records.

6. The functional connection unit (102) according to one of the preceding claims, wherein the communication interface (103) is configured to transmit data according to a communication protocol, in particular according to the USB protocol.

7. The functional connection unit (102) according to one of the preceding claims, to which sensors and/or actuators are connectable as parameterizable functional modules (118a, 118b).

8. A method for parameterizing a parameterizable functional module (118a, 118b) by means of a functional connection unit (102), to which the parameterizable functional module (118a, 118b) is connected via a functional module connection (120a-120b), the method comprising:
receiving first parameter data records for parameterizing the parameterizable functional module (118a, 118b), wherein the first parameter data records comprise parameter data for parameterizing the parameterizable functional module (118a, 118b) and first parameter indices, the first parameter indices indexing a memory area for the parameter data;
converting the first parameter indices into second parameter indices in order to obtain second parameter data records, the second parameter indices indexing a predetermined memory area of the parameterizable functional module (118a, 118b) for storing the parameter data in the parameterizable functional module (118a, 118b);
transmitting the second parameter data records to the parameterizable functional module (118a, 118b) by the functional connection unit (102) in order to parameterize the parameterizable functional module (118a, 118b);
reading out a conversion rule, which indicates a conversion of the first parameter indices into the second parameter indices, from a parameter data memory (125), in which the conversion rule is stored,
wherein converting the first parameter indices into the second parameter indices follows according to the conversion rule,
wherein the second parameter indices are at least one memory address of the parameterizable functional module (118a, 118b),
**characterized in that** the first parameter data records comprise an activation field, which indicates an activation or a deactivation of the parameter data,
that the first parameter indices are received from a control server during an activation of the functional connection unit (102),
and that the first parameter data comprises a first numerical value, wherein the processor (105) converts the first numerical value into a second numerical value, which is in a number range of the parameterizable functional module (118a, 118b) in order to obtain the second parameter data records.

9. The method according to Claim 8, which is carried out during an activation of the functional connection unit (102).

## Revendications

1. Unité de raccordement de fonction (102) pour le raccordement d'au moins un module fonctionnel (118a, 118b) paramétrable, comprenant :
au moins une borne de module fonctionnel (120a, 120b) à laquelle peut être raccordé le module fonctionnel (118a, 118b) paramétrable ;
une interface de communication (103), qui est configurée pour recevoir des premiers jeux de données de paramètres, les premiers jeux de données de paramètres possédant des données de paramètres destinées au paramétrage du module fonctionnel (118a, 118b) paramétrable et des premiers indices de paramètre, lesquels indicent une zone de mémoire pour les données de paramètre ; et
un processeur (105), qui est configuré pour transférer les premiers indices de paramètre en des deuxièmes indices de paramètre afin d'obtenir des deuxièmes jeux de données de paramètres, les deuxièmes indices de paramètre indiçant une zone de mémoire prédéterminée du module fonctionnel (118a, 118b) paramétrable pour l'enregistrement des données de paramètres dans le module fonctionnel (118a, 118b) paramétrable,
l'unité de raccordement de fonction (102) possédant une mémoire de données de paramètres (126), une prescription de transfert étant enregistrée dans la mémoire de données de paramètres (126), laquelle indique le transfert des premiers indices de paramètre en les deuxièmes indices de paramètre, et le processeur étant configuré pour lire la prescription de transfert depuis la mémoire de données de paramètres (126) et pour transférer les premiers indices de paramètre en les deuxièmes indices de paramètre conformément à la prescription de transfert,
l'interface de communication (103) étant configurée pour recevoir les premiers indices de paramètre de la part d'un serveur de commande pendant une mise en service de l'unité de raccordement de fonction (102),
les deuxièmes indices de paramètre étant au moins une adresse de mémoire du module fonctionnel (118a, 118b) paramétrable,
**caractérisée en ce que**
les premiers jeux de données de paramètres possèdent un champ d'activation qui indique une activation ou une désactivation des données de paramètres,
et **en ce que** les premières données de paramètres comprennent une première valeur numérique, le processeur (105) étant configuré pour transférer la première valeur numérique en une deuxième valeur numérique, laquelle se trouve dans une plage de chiffres du module fonctionnel (118a, 118b) paramétrable, afin d'obtenir les deuxièmes jeux de données de paramètres.

2. Unité de raccordement de fonction (102) selon la revendication 1, l'unité de raccordement de fonction (102) étant un maître selon le protocole d'interface de communication numérique point à point pour petits capteurs et actionneurs (SDCI), notamment un maître d'E/S.

3. Unité de raccordement de fonction (102) selon l'une des revendications précédentes, les premières données de paramètres possédant une première représentation de paramètres et le processeur étant configuré pour transférer la première représentation de paramètres en une deuxième représentation de paramètres afin d'obtenir les deuxièmes jeux de données de paramètres.

4. Unité de raccordement de fonction (102) selon l'une des revendications précédentes, les premiers jeux de données de paramètres et/ou les deuxièmes jeux de données de paramètres comprenant en outre une longueur de paramètres et/ou une valeur de paramètres des données de paramètres.

5. Unité de raccordement de fonction (102) selon l'une des revendications précédentes, l'interface de communication (103) comportant une interface de saisie, notamment une interface utilisateur graphique ou un clavier, servant à la saisie manuelle des premiers jeux de données de paramètres.

6. Unité de raccordement de fonction (102) selon l'une des revendications précédentes, l'interface de communication (103) étant configurée pour la transmission de données selon un protocole de communication, notamment selon le protocole USB.

7. Unité de raccordement de fonction (102) selon l'une des revendications précédentes, à laquelle peuvent être raccordés des capteurs et/ou des actionneurs en tant que modules fonctionnels (118a, 118b) paramétrables.

8. Procédé de paramétrage d'un module fonctionnel (118a, 118b) paramétrable au moyen d'une unité de raccordement de fonction (102) à laquelle le module fonctionnel (118a, 118b) paramétrable est raccordé par le biais d'une borne de module fonctionnel (120a - 120b), comprenant les étapes suivantes :
réception de premiers jeux de données de paramètres destinés au paramétrage du module fonctionnel (118a, 118b) paramétrable, les premiers jeux de données de paramètres possédant des données de paramètres destinées au paramétrage du module fonctionnel (118a, 118b) paramétrable et des premiers indices de paramètre, lesquels indicent une zone de mémoire pour les données de paramètre ;
transfert des premiers indices de paramètre en des deuxièmes indices de paramètre afin d'obtenir des deuxièmes jeux de données de paramètres, les deuxièmes indices de paramètre indiçant une zone de mémoire prédéterminée du module fonctionnel (118a, 118b) paramétrable pour l'enregistrement des données de paramètres dans le module fonctionnel (118a, 118b) paramétrable ;
envoi des deuxièmes jeux de données de paramètres au module fonctionnel (118a, 118b) paramétrable par le biais de l'unité de raccordement de fonction (102) afin de paramétrer le module fonctionnel (118a, 118b) paramétrable ;
lecture d'une prescription de transfert, laquelle indique un transfert des premiers indices de paramètre en les deuxièmes indices de paramètre, depuis une mémoire de données de paramètres (126) dans laquelle est enregistrée la prescription de transfert,
le transfert des premiers indices de paramètre en les deuxièmes indices de paramètre s'effectuant conformément à la prescription de transfert,
les deuxièmes indices de paramètre étant au moins une adresse de mémoire du module fonctionnel (118a, 118b) paramétrable,
**caractérisée en ce que**
les premiers jeux de données de paramètres possèdent un champ d'activation qui indique une activation ou une désactivation des données de paramètres,
**en ce que** les premiers jeux de données de paramètres sont reçus de la part d'un serveur de commande pendant une mise en service de l'unité de raccordement de fonction (102),
et **en ce que** les premières données de paramètres comprennent une première valeur numérique, le processeur (105) transférant la première valeur numérique en une deuxième valeur numérique, laquelle se trouve dans une plage de chiffres du module fonctionnel (118a, 118b) paramétrable, afin d'obtenir les deuxièmes jeux de données de paramètres.

9. Procédé selon la revendication 8, qui est mis en œuvre pendant la mise en service de l'unité de raccordement de fonction (102).
